Europäisches Patentamt

European Patent Office

Office européen des brevets

(11) Veröffentlichungsnummer: **0 322 831**
**A1**

# (12) EUROPÄISCHE PATENTANMELDUNG

(21) Anmeldenummer: 88121658.4

(22) Anmeldetag: 24.12.88

(51) Int. Cl.⁴: **C05B 5/00 , C05B 17/00 , C05D 3/02 , C05G 3/04**

(30) Priorität: 28.12.87 DE 3744317

(43) Veröffentlichungstag der Anmeldung:
05.07.89 Patentblatt 89/27

(84) Benannte Vertragsstaaten:
AT BE CH DE ES FR GB GR IT LI LU NL SE

(71) Anmelder: Kürner, Rudolf, Dr.
Wehrheimer Strasse 1
D-6380 Bad Homburg(DE)

(72) Erfinder: Kürner, Rudolf, Dr.
Wehrheimer Strasse 1
D-6380 Bad Homburg(DE)

(74) Vertreter: Weber, Dieter, Dr. et al
Dr. Dieter Weber und Dipl.-Phys. Klaus
Seiffert Patentanwälte
Gustav-Freytag-Strasse 25 Postfach 6145
D-6200 Wiesbaden 1(DE)

(54) Verwendung von Calciumsulfat zur Verbesserung der Fermentierung organischer Abfallstoffe.

(57) Calciumsulfat wird zusammen mit Montmorillonit und wenigstens einem Phosphat zur Verbesserung der Fermentierung organischer Abfallstoffe und/oder zur Bodenverbesserung verwendet.

EP 0 322 831 A1

## Verwendung von Calciumsulfat zur Verbesserung der Fermentierung organischer Abfallstoffe

Organische Abfallstoffe insbesondere pflanzlichen Ursprungs werden unter dem Einfluß vor allem aerober Mikroorganismen unter Humusbildung abgebaut. An der Humusbildung sind nicht nur Bakterien und Pilze, sondern auch Protozoen sowie niedere und höhere Würmer beteiligt. Für die Qualität des Humus und die Geschwindigkeit der mikrobiellen Umsetzungen ist die An- oder Abwesenheit von Basen von maßgebender Bedeutung. Sind basische Mineralstoffe in ausreichender Menge vorhanden, so bilden sich mit Basen abgesättigte Humuskolloide, die mit den Tonkolloiden zusammen den sogenannten Sorptionskomplex des Bodens ausmachen.

Basische Mineralstoffe, die bei der Humusbildung üblicherweise zugesetzt werden, sind Calciumcarbonat und Dolomit, neuerdings auch Korallen- bzw. Algenkalk. Calciumcarbonat und dessen Doppelsalz mit Magnesiumcarbonat sind jedoch nur sehr wenig löslich, was ihren Effekt geringe macht. Außerdem wirkt sich die Alkalität bei bestimmten Mikroorganismen negativ aus, was auch zu einer langsamen Verrottung bei der Humusbildung führt.

Calciumoxid wurde bereits Klärschlämmen zur Verfestigung zugesetzt, um sie deponierbar zu machen, doch würde Calciumoxid das Mikroorganismenleben zunächst völlig oder weitgehend abtöten, so daß Calciumoxid für eine beschleunigte Humusbildung ungeeignet ist.

Insbesondere durch die zunehmend durchgeführte Entschwefelung der Rauchgase von Kohlekraftwerken wird in naher Zukunft eine nicht zu verwertende Menge an Calciumsulfat, sogenannter REA-Gips, anfallen, das nicht nur ein bislang wertloses Nebenprodukt ist, sondern durch die Deponierung zusätzliche Kosten verursacht.

Aus der DE-OS 3 614 183 ist es bekannt, Calciumsulfat zusammen mit Dolomit, Soda, Borax und Citronensäure als Düngemittel oder Schnellkompostierungsmittel für organische Abfälle zu verwenden.

Die der Erfindung zugrundeliegende Aufgabe bestand nun darin, mit dem künftig in großen Mengen anfallenden Calciumsulfat die Fermentierung organischer Abfallstoffe zu verbessern und/oder eine erhöhte Bodenverbesserung zu bekommen.

Erfindungsgemäß wird diese Aufgabe dadurch gelöst, daß man zur Verbesserung der Fermentierung organischer Abfallstoffe und/oder Bodenverbesserung Calciumsulfat zusammen mit Montmorillonit und wenigstens einem Phosphat verwendet.

Wenn hier von einer Fermentierung organischer Abfallstoffe die Rede ist, so ist dieser Begriff im weitesten Sinne gemeint und bedeutet den mikrobiellen Abbau pflanzlicher und tierischer Stoffe, wie die Kompostierung und Humifizierung, den Abbau von organischem Haus- und Industriemüll, die Flächenbehandlung von landwirtschaftlichen und forstwirtschaftlichen Böden und andere Abbauverfahren für organische Abfallstoffe mit der Einwirkung von Mikroorganismen, wie Bakterien und Pilzen.

Die erfindungsgemäße Verwendung von Calciumsulfat beliebiger Provenienz, wie von REA-Gips, anderem Gips oder Anhydrit, in den genannten Gemischen führt zu einer Reihe überraschender Vorteile, die der Fachmann nicht vorhersehen konnte.

So wird die Zumischung von Calciumsulfat zu organischen Abfallstoffen bei deren Fermentierung, wie zu Rotten für Kompostierung, nicht nur toleriert, sondern überraschenderweise wird die Fermentierung durch diese Zumischung aktiviert und beschleunigt, was möglicherweise auf verschiedene Ursachen zurückzuführen ist. Calciumsulfat ist besser löslich als Calciumcarbonat, reagiert neutral und enthält außerdem für die am Anfang der Verrottung eine wesentliche Rolle spielenden Actinomyceten erforderlichen Calcium auch von den Mikroorganismen benötigten Schwefel, und zwar bereits in oxidierter Form. Die vorliegende Erfindung soll nicht an eine bestimmte Theorie gebunden werden, doch läßt sich experimentell nachweisen, daß durch den Zusatz von Calciumsulfat die chemischen Umsetzungen bei der Kompostierung schneller ablaufen und die Kompostierung früher abgeschlossen ist als nach dem Stand der Technik.

Durch die erfindungsgemäß verwendeten Gemische wird bei der Kompostierung oder Flächendüngung die Qualität des Humus wesentlich verbessert. Dies zeigt sich nicht nur optisch und sensorisch am Humusprodukt, sondern läßt sich anhand einer Ertragssteigerung quantifizieren, die bei Vergleichsversuchen auf unterschiedlich erzeugtem Humus nachweisbar ist. So konnte anhand von Versuchen festgestellt werden, daß der Pflanzenertrag auf Humus, der unter Zusatz eines erfindungsgemäßen Gemisches bereitet worden war, wesentlich höher als der Ertrag mit Humus war, welcher durch Zugabe von Lavamehl oder Algenkalk unter Mitverwendung von Calciumphosphat und Bentonit oder durch Zusatz einer Mischung von Thomasmehl und Bentonit oder durch Zusatz eines Gemisches von Calciumsulfat, Dolomit, Soda, Borax und Citronensäure erhalten worden war.

Weiterhin wurde festgestellt, daß die mikrobielle Fermentierung organischer Abfallstoffe unter Zusatz der erfindungsgemäß verwendeten Gemische eine entgiftende Wirkung hat, da beispielsweise Schwetmetalle, wie Cadmium, von den Mikroorganismen verbraucht werden. Bei Böden, die geringe Cadmiumgehalte aufweisen, wurde sogar eine starke Erhöhung der mikrobiellen Aktivität beobachtet.

Schließlich kann durch die erfindungsgemäß gesetzten Gemische zu tierischen oder menschlichen Exkrementen die Geruchsbelästigung beseitigt werden, da ein schneller mikrobi eller Abbau der Gülle erfolgt, so daß diese ohne Geruchsbelästigung als Düngemittel eingesetzt werden kann.

Da bekanntermaßen die mikrobielle Umsetzung beliebiger organischer Abfallstoffe tierischen oder pflanzlichen Ursprungs gleichartig aerob verläuft, ist davon auszugehen, daß die erfindungsgemäße Verwendung von Calciumsulfat bei jeglicher Fermentierung organischer Abfallstoffe zu den geschilderten Vorteilen führt, gleichgültig ob es sich bei den organischen Abfallstoffen um feste oder flüssige tierische oder menschliche Exkremente, um die Mulchung oder Flächenkompostierung von Stroh, Stopoeln oder Blattmasse, um forstlichen Laub-und Nadelabwurf oder um Siedlungsabfälle in Rotten oder Feststofffermentern handelt.

Bei der Fermentierung von Abfallstoffen in Masse, wie bei Rotten für die Kompostierung oder bei Feststofffermentern, ist es zweckmäßig, das Calciumsulfat in einer Menge von 100 g bis 50 kg, vorzugsweise bis 15 kg, vorzugsweise von 5 bis 10 kg je Kubikmeter der organischen Abfallstoffe zuzusetzen. Im Falle der Flächenbehandlung, wie beim Mulchen oder bei der Flächenkompostierung, ist es zweckmäßig, das Calciumsulfat pro Quadratmeter in einer Menge von 50 g bis 5 kg, vorzugsweise bis 1 kg, besonders in einer Menge von 100 bis 500 g auszustreuen.

Die erfindungsgemäß zugesetzten Montmorillonite sind bevorzugt Bentonite, besonders Calciumbentonit. Die Montmorillonite haben einen besonders günstigen Einfluß, da sie sich an die Huminsäuren anlagern und da die so gebildeten Komplexe das Wasser im Boden zurückhalten.

Als Phosphate können erfindungsgemäß leichtlösliche oder schwerlösliche Phosphate benutzt werden. Leichtlösliche Phosphate sind die bekannten Superphosphate, die Calciumdihydrogenphosphat und Calciumsulfat enthalten und durch Umsetzung von Rohphosphaten mit Schwefelsäure erhalten werden können. Bevorzugt werden erfindungsgemäß aber schwerlösliche Phosphate benutzt, wie besonders Rohphosphatmehle und/oder Thosmasphosphatmehle. Die Thomasphosphate stammen aus der Auskleidung der Thomaskonverter und enthalten ca. 15 % $P_2O_5$. Rohphosphate besitzen beispielsweise einen $P_2O_5$-Gehalt von etwa 30 %. Zusätzlich zu den oben aufgeführten Bestandteilen können erfindungsgemäß mit dem Calciumsulfat auch Thomaskalk oder Hüttenkalk verwendet werden.

Die drei erfindungsgemäß zwingenden Bestandteile Calciumsulfat, Montmorillonit und Phosphat können getrennt in die zu fermentierenden organischen Abfallstoffe oder auf den zu verbessernden Boden gebracht werden. Vorzugsweise setzt man sie jedoch im Gemisch miteinander, als Mittel zur Bodenverbesserung oder zur Verbesserung der Fermentierung organischer Abfallstoffe, ein.

Solche erfindungsgemäßen Mittel enthalten gegebenenfalls zusätzlich weitere Erdalkaliverbindungen, vorzugsweise Calcium- und/oder Magnesiumverbindungen oder -mineralien, die solche Verbindungen enthalten. Auch enthalten die erfindungsgemäßen Mittel zweckmäßig zusätzlich Spurenelemente, vorzugsweise in der Form von Erzpulvern und/oder Schlackenmehlen.

Eine besonders günstige Form von Bodenverbesserungsmitteln nach der Erfindung besteht darin, daß sie zusätzlich zu den Gemischen von Calciumsulfat, Montmorillonit und Phosphat Schaumstoff-Flocken, vorzugsweise Aminoplastschaumstoff-Flocken sowie Humus enthalten. Hierfür geeignete Aminoplastschaumstoff-Flocken können gemäß der DE-PS 2 447 880 hergestellt werden, auf die hier vollinhaltlich Bezug genommen wird. Die erfindungsgemäß verwendeten Schaumstoff-Flocken können insbesondere die in dieser DE-PS 2 447 880 beschriebenen Merkmale besitzen. Zweckmäßig enthalten die Bodenverbesserungsmittel dabei je' Volumenteil Humus 3 bis 6, vorzugsweise 4 bis 5 Volumenteile der Schaumstoff-Flocken und 0,025 bis 0,25, vorzugsweise 0,05 bis 0,15 Volumenteile eines Gemisches von Calciumsulfat, Montmorillonit und Phosphat, gegebenenfalls mit Spurenelementen.

Unabhängig davon, ob Calciumsulfat, Montmorillonit und Phosphat getrennt oder in einem Vorgemisch miteinander eingesetzt werden, ist es zweckmäßig, daß die Mengenverhältnisse dieser drei erfindungsgemäßen Bestandteile so eingestellt werden, daß das Gewichtsverhältnis von Calciumsulfat zu Montmorillonit 1 : 0,1 bis 10, vorzugsweise 1 : 0,25 bis 5, besonders 1 : 0,5 bis 1,5 beträgt und daß das Gewichtsverhältnis von Calciumsulfat zu Phosphat 1 : 0,1 bis 10, vorzugsweise 1 : 0,25 bis 5, besonders 1 : 0,5 bis 2 beträgt. Gute Ergebnisse erhält man beispielsweise bei einem Gewichtsverhältnis von Calciumsulfat zu Montmorillonit zu Phosphat von 1 : 1 : 1 oder 1 : 1 : 0,5.

Vergleichsversuch 1

Nach dem üblichen Kressetest wurde ein nach der Erfindung hergestellter Humus hinsichtlich des Ertrages mit zwei nach dem Stand der Technik gewonnenen Humusarten verglichen.

Der erfindungsgemäße Humus wurde in einem statischen Tunnelreaktor unter Zugabe von 1 kg Clacíumsulfat, 5 kg Dolomit, 15 kg Thomasphosphatmehl und 10 kg Bentonit pro 1,5 m³ Pflanzenabfälle gewonnen. Dieser Humus wurde als Hümus A bezeichnet.

Ein Vergleichshumus B wurde in entsprechender Weise unter Zusatz von 10 kg Bentonit und 15 kg Thomasphosphatmehl, aber ohne Calciumsulfat, gewonnen. Ein weiterer Vergleichshumus wurde in derselben Apparatur unter Zusatz von 10 kg Bentonit, 10 kg Lavamehl und 10 kg Rohphosphat pro 1,5 m³ erhalten. Schließlich wurde als Vergleichshumus D ein handelsüblicher Wurmhumus auf der Basis von Rinderdung verwendet.

Bei dem quantitativen Kressetest werden flache Schalen aus Zement von 40 x 25 x 6 cm mit dem zu prüfenden Kompost gefüllt mit 10 g Kressesamen besät. Am zweiten und vierten Tag wird das verbrauchte Wasser ersetzt. Am sechsten Tag wird die Kresse mit der Schere geschnitten und gewogen.

Dabei ergab der Vergleichshumus C 86 g Ertrag, der handelsübliche Wurmhumus D 124 g, der nur unter Verwendung von Thomasphosphatmehl und Bentonit erhaltene Humus B 137 g, der erfindungsgemäß uinter Calciumsulfatzusatz erhaltene Humus A aber 160 g.

Es ist also ersichtlich, daß der Calciumsulfatzusatz eine erhebliche Humusverbesserung in Form einer Ertragssteigerung ergibt.

## Vergleichsversuch 2

Um den überraschenden technischen Effekt der Erfindung gegenüber dem Gegenstand der DE-OS 3 614 183 zu zeigen, wurde ein Vergleichsversuch mit Kressesamen durchgeführt.

Ansatz A bestand aus 1 1 Humus, der mit 3,8 g Gips, 3,8 g Thomasphosphat und 1,5 g Bentonit gut vermischt wurde.

Ansatz B bescand aus 1 1 Humus, der mit 5 g pulverisiertem Dihydratgips, 1,5 g pulverisiertem Dolomit, 0,4 g Soda, 0,175 Borax und 0,05 g Citronensäure gut vermischt wurde.

Von jedem der beiden Ansätze A und B wurden 4 g mit 50 ml Wasser angeschlämmt, und darin ließ man 4 g Kressesamen 90 min quellen.

Beide Samenaufschlämmungen wurden in ei-nem Pflanzgitter mit Humus verteilt und an einem regengeschützten Platz im Freien aufgestellt. Die Bewässerung erfolgte automatisch durch ein gleichen. Bodenwasserstand garantierendes Aufzuchtgefäß.

| Ergebnisse: | Ansatz A | Ansatz B |
|---|---|---|
| pH-Wert der Samenaufschlämmung | 8,0 | 8,6 |
| Anzahl gekeimter Samen nach 24 h | 78 | 69 |
| Anzahl der gekeimten Samen nach 3 Tagen | ca. 250 | ca. 150 |
| Durchschnittliche Länge der gekeimten Pflanzen nach 10 Tagen | 45 mm | 35 mm |
| Frischgewicht nach 10 Tagen einschließlich des Samenkorns | 31 g | 24 g |

**Ansprüche**

1. Verwendung von Calciumsulfat zusammen mit Montmorillonit und wenigstens einem Phosphat zur Verbesserung der Fermentierung organischer Abfallstoffe und/oder zur Bodenverbesserung.

2. Verwendung von bei der Rauchgasentschwefelung entstandenem Calciumsulfat nach Anspruch 1.

3. Verwendung von Calciumsulfat in einem Gewichtsverhältnis zu Montmorillonit von 1 : 0,1 bis 10, vorzugsweise 1 : 0,25 bis 5, besonders 1 : 0,5 bis 1,5 und in einem Mengenverhältnis zu Phosphat von 1 : 0.1 bis 10, vorzugsweise 1 : 0,25 bis 5, besonders 1 : 0,5 bis 2 nach Anspruch 1 oder 2.

4. Verwendung von Calciumsulfat zusammen mit wenigstens einem schwerlöslichen Phosphat, vorzugsweise Rohphosphatmehl und/oder Thomasphosphatmehl nach einem der Ansprüche 1 bis 3.

5. Verwendung von Calciumsulfat nach einem der Ansprüche 1 bis 4 zusammen mit zusätzlich weiteren Erdalkaliverbindungen, vorzugsweise Calcium- und/oder Magnesiumverbindungen oder -mineralien.

6. Verwendung von Calciumsulfat nach einem der Ansprüche 1 bis 5 im Gemisch mit dem Montmorillonit und Phosohat.

7. Verwendung von Calciumsulfat in einer Menge von 100 g bis 50 kg, vorzugsweise bis 15 kg je Kubikmeter der zu fermentierenden organischen Abfallstoffe nach einem der Ansprüche 1 bis 6.

8. Verwendung von Calciumsulfat in einer Menge von 50 g bis 5 kg, vorzugsweise bis zu 1 kg je Quadratneter bei der Flächenkompostierung nach einem der Ansprüche 1 bis 6.

9. Mittel zur Verbesserung der Fermentierung organischer Abfallstoffe und/oder zur Bodenverbesserung mit einem Gehalt an Calciumsulfat, dadurch gekennzeichnet, daß es zusätzlich Montmorillonit und wenigstens ein Phosphat enthält.

10. Mittel nach Anspruch 9, dadurch gekennzeichnet, daß es als Calciumsulfat bei der Rauchgasentschwefelung entstandenes Calciumsulfat enthält.

11. Mittel nach Anspruch 9 oder 10, dadurch gekennzeichnet, daß es ein Gewichtsverhältnis von Calciumsulfat zu Montmorillonit von 1 : 0,1 bis 10, vorzugsweise 1 : 0,25 bis 5, besonders 1 : 0,5 bis 1,5, und von Calciumsulfat zu Phosphat von 1 :0,1 bis 10, vorzugsweise 1 : 0,25 bis 5, besonders 1 : 0,5 bis 2 enthält.

12. Mittel nach einem der Ansprüche 9 bis 11, dadurch gekennzeichnet, daß es als Phosphat schwerlösliche Phosphate, vorzugsweise Rohphosphatmehl und/oder Thomasphosphatmehl enthält.

13. Mittel nach einem der Ansprüche 1 bis 12, dadurch gekennzeichnet, daß es zusätzlich weitere Erdalkaliverbindungen, vorzugsweise Calcium- und/oder Magnesiumverbindungen oder -mineralien enthält.

14. Mittel nach einem der Ansprüche 9 bis 13, dadurch gekennzeichnet, daß es zusätzlich Spurenelemente, vorzugsweise Erzpulver und/oder Schlackenmehl, enthält.

15. Mittel nach einem der Ansprüche 9 bis 14, dadurch gekennzeichnet, daß es zusätzlich Schaumstoff-Flocken, vorzugsweise Aminoplastschaumstoff-Flocken, und Humus enthält.

16. Mittel nach Anspruch 15, dadurch gekennzeichnet, daß es je Volumenteil Humus 3 bis 6, vorzugsweise 4 bis 5 Volumenteile der Schaumstoff-Flocken und 0,025 bis 0,25, vorzugsweise 0,05 bis 0,15 Volumenteile des Gemisches nach einem der Ansprüche 1 bis 14 enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 157 683 (ETABLISSEMENTS GARDINIER) * Insgesamt * | 1,2,4-6 ,9,10, 12 | C 05 B 5/00 C 05 B 17/00 C 05 D 3/02 C 05 G 3/04 |
| A | | 3,7,8, 11 | |
| Y | EP-A-0 192 954 (MARX BERGBAU GmbH & CO. KG) * Insgesamt * | 1,2,4-6 ,9,10, 12 | |
| A | | 3,7,8, 11 | |
| A | FR-A- 525 201 (G. TRUFFAUT) * Insgesamt * --- | 1,4-6,9 | |
| D,A | DE-A-3 614 183 (R. FISCHER) ----- | 1 | |

|  | RECHERCHIERTE SACHGEBIETE (Int. Cl.4) |
|---|---|
|  | C 05 B C 05 D C 05 F C 05 G |

Der vorliegende Recherchenbericht wurde für alle Patentansprüche erstellt

| Recherchenort | Abschlußdatum der Recherche | Prüfer |
|---|---|---|
| DEN HAAG | 20-03-1989 | MINI A.E. |